# EUROPEAN PATENT APPLICATION

(11) **EP 4 684 942 A1**
(43) Date of publication of application: **28.01.2026**
(21) Application number: 24840043.4
(22) Date of filing: 08.07.2024
(51) Int. Cl.: B29C 65/00, B29C 53/06, B29C 65/02

(54) **SECONDARY BATTERY, AND FOLDING APPARATUS AND FOLDING METHOD THEREFOR**

(30) Priority: 11.07.2023 KR 20230090060; 03.07.2024 KR 20240087493
(71) Applicant: LG Energy Solution, Ltd., Seoul 07335 (KR)
(72) Inventor: PARK, Sung Chul, Daejeon 34122 (KR); KANG, Tae Won, Daejeon 34122 (KR)
(74) Representative: Goddar, Heinz J.
(86) International application number: PCT/KR2024/009709
(87) International publication number: WO 2025/014232

(57) **Abstract**

A secondary battery of the present invention includes a pouch provided with an accommodation part, in which an electrode assembly is accommodated, and a sealing part provided at an end of the accommodation part to seal the accommodation part, wherein the sealing part includes: a first sealing surface bent from the end of the accommodation part in one direction; a second sealing surface bent from an end of the first sealing surface in the other direction; a third sealing surface bent from an end of the second sealing surface in a direction in which the first sealing surface is disposed; and a fourth sealing surface inserted between the first sealing surface and the second sealing surface from an end of the third sealing surface.

## Description

### TECHNICAL FIELD

### CROSS-REFERENCE TO RELATED APPLICATION

The present application claims the benefit of the priority of Korean Patent Application Nos. 10-2023-0090060, filed on July 11, 2023, and 10-2024-0087493, filed on July 3, 2024, which are hereby incorporated by reference in their entirety.

### TECHNICAL FIELD

The present invention relates to a secondary battery capable of folding a sealing part of a pouch in a new manner and an apparatus and method for folding the same.

### BACKGROUND ART

In general, secondary batteries refer to chargeable and dischargeable batteries, unlike primary batteries that are impossible to be charged. The secondary batteries are being widely used in advanced electronic devices such as phones, laptop computers, and camcorders.

In addition, the secondary batteries may be classified in various manners depending on a structure of an electrode assembly. For example, secondary batteries may be classified into a stacked type structure, a wound type (jelly roll-type) structure, and a stacking/folding type structure.

The above-described secondary battery includes an electrode assembly, an electrolyte, and a case that accommodates the electrode assembly and the electrolyte. The electrode assembly includes one or more radical units, and each of the radical units has a structure in which a positive electrode and a negative electrode are alternately arranged with a separator therebetween. The case includes an accommodation part that accommodates the electrode assembly and a sealing part that seals the accommodation part.

The case is folded to overlap the sealing part, thereby increasing in adhesion force and strength of the sealing part and minimizing a size of the sealing part.

That is, a method for folding a sealing part according to the related art includes a process of pressing a sealing part using heat and a pressure, a process of folding a front end of the sealing part at an angle of 90°, a process of folding the front end of the sealing part again at an angle of 90° so that the front end of the sealing part is in close contact with a rear end of the sealing part, a process of pressing the front end of the sealing part through heat and a pressure, a process of folding the rear end of the sealing part at an angle of 90°, and a process of pressing the sealing part in an accommodation direction.

However, the method for folding the sealing part according to the related art has a problem that it requires a lot of work process and work time, and thus, a method for more effectively folding the sealing part of the pouch effectively is needed.

### DISCLOSURE OF THE INVENTION

### TECHNICAL PROBLEM

An object of the present invention is to provide a secondary battery, in which a sealing part of a pouch rotates at least once using a pair of rollers so as to be folded, thereby simplifying a work process and shortening a work time, and an apparatus and method for folding the same.

### TECHNICAL SOLUTION

A secondary battery of the present invention may include a pouch provided with an accommodation part, in which an electrode assembly is accommodated, and a sealing part provided at an end of the accommodation part to seal the accommodation part, wherein the sealing part may include: a first sealing surface bent from the end of the accommodation part in one direction; a second sealing surface bent from an end of the first sealing surface in the other direction; a third sealing surface bent from an end of the second sealing surface in a direction in which the first sealing surface is disposed; and a fourth sealing surface inserted between the first sealing surface and the second sealing surface from an end of the third sealing surface.

The fourth sealing surface may have a length less than or equal to half a length of the first sealing surface when measured in the one direction.

The fourth sealing surface may adhere to the first sealing surface and the second sealing surface.

The second sealing surface may have one side that is in contact with the first sealing surface and the other side that is in contact with the third sealing surface.

An apparatus for folding a secondary battery, which folds a pouch provided with an accommodation part, in which an electrode assembly is accommodated, and a sealing part provided at an end of the accommodation part to seal the accommodation part, may include: a folding unit configured to rotate the sealing part at least once in a state of pressing the sealing part, thereby folding the sealing part.

The folding unit may include: a first folding member and a second folding member, which move from one end to a distal end of the sealing part to press the sealing part; a moving member configured to move the first folding member and the second folding member in one direction parallel to a thickness direction of the electrode assembly when the one end of the sealing part is pressed by the first folding member and the second folding member so that a first sealing surface bent from the end of the accommodation part in the one direction is provided; and a rotating member configured to rotate the first folding member and the second folding member at least once, thereby providing a second sealing surface bent from an end of the first sealing surface in the other direction, a third sealing surface bent from an end of the second sealing surface in a direction in which the first sealing surface is disposed, and a fourth sealing surface inserted between the first sealing surface and the second sealing surface from an end of the third sealing surface.

Each of the first folding member and the second folding member may be provided as a hot roller configured to heat the sealing part in the state of pressing the sealing part.

The first folding member and the second folding member may have the same size and a diameter that is less than 1/5 of a length from the one end to the distal end of the sealing part.

The first folding member and the second folding member may have heating temperatures different from each other.

When the first folding member and the second folding member rotate in a direction facing the first folding member, the second folding member may have a heating temperature greater than that of the first folding member.

The apparatus may further include a cooling unit configured to cool the sealing part folded by the first folding member and the second folding member to room temperature or a preset temperature, thereby curing the sealing part.

The apparatus may further include a pressing unit configured to press and bond the sealing part having the first sealing surface, the second sealing surface, the third sealing surface, and the fourth sealing surface, wherein the pressing unit may adhere in a state in which the fourth sealing surface is inserted between the first sealing surface and the second sealing surface.

A method for folding a secondary battery may include: (a) preparing the secondary battery, wherein the secondary battery comprises an electrode assembly and a pouch provided with an accommodation part, in which the electrode assembly is accommodated, and a sealing part provided at an end of the accommodation part to seal the accommodation part; and (b) rotating the sealing part at least once through a folding unit in a state of pressing the sealing part to fold the sealing part.

(b) the rotating of the sealing part may include: pressing one end of the sealing part connected to an end of the accommodation part through the first folding member and the second folding member of the folding unit; forming a first sealing surface bent in one direction from the end of the accommodation part by moving the sealing part in the one direction parallel to a thickness direction of the electrode assembly through a moving member of the folding unit when the one end of the sealing part is pressed; moving the first folding member and the second folding member up to an end of the sealing part; and rotating the first folding member and the second folding member at least once through a rotating member of the folding unit to form a second sealing surface bent from an end of the first sealing surface in the other direction, a third sealing surface bent in a direction facing the first sealing surface from an end of the second sealing surface, and a fourth sealing surface inserted between the first sealing surface and the second sealing surface from an end of the third sealing surface.

In (b) the rotating of the sealing part, the first folding member and the second folding member may be configured to heat the sealing part while pressing the sealing part.

In (b) the rotating of the sealing part, the first folding member and the second folding member may have the same size and a diameter that is less than 1/5 of a length from the one end to the distal end of the sealing part.

In (b) the rotating of the sealing part, the first and second folding members may have heating temperatures different from each other.

When the first folding member and the second folding member rotate in a direction facing the first folding member, the second folding member may have a heating temperature greater than that of the first folding member.

The method may further include cooling the sealing part folded in (b) the rotating of the sealing part.

The method may further include pressing the sealing part in a direction toward the electrode assembly accommodation part so that the folded sealing part overlaps to be flattened.

### ADVANTAGEOUS EFFECTS

The secondary battery of the present invention may include the accommodation part that accommodates the electrode assembly and the sealing part provided on the end of the accommodation part to seal the accommodation part, and the sealing part may include: the first sealing surface; the second sealing surface; the third sealing surface; and the fourth sealing surface inserted between the first sealing surface and the second sealing surface. Due to these features, the loosening phenomenon of the folded sealing part may be prevented, and the sealing force of the sealing part may significantly increase.

In addition, the apparatus for folding the secondary battery of the present invention may include the folding unit provided with the first and second folding members to effectively fold the sealing part of the pouch, thereby simplifying a work process and shortening a work time.

### BRIEF DESCRIPTION OF THE DRAWINGS

FIG. 1 is a front view of a secondary battery according to an embodiment of the present invention.
FIG. 2 is a front view illustrating a state before the secondary battery is folded by an apparatus for folding the secondary battery according to an embodiment of the present invention.
FIG. 3 is a front view illustrating a state after the secondary battery is folded by the apparatus for folding the secondary battery according to an embodiment of the present invention.
FIG. 4 is a front view illustrating a cooling member of the apparatus for folding the secondary battery according to an embodiment of the present invention.
FIG. 5 is a front view illustrating a pressing member of the apparatus for folding the secondary battery according to an embodiment of the present invention.
FIG. 6 is a flowchart illustrating a method for folding a secondary battery according to an embodiment of the present invention.
FIG. 7 is a front view illustrating a secondary battery prepared by (a) a secondary battery preparation process in the method for folding the secondary battery according to an embodiment of the present invention.
FIG. 8 is a process view illustrating a state before pressing a sealing part as (b) a sealing part processing process in the method for folding the secondary battery according to an embodiment of the present invention.
FIG. 9 is a process view illustrating a state after completely pressing the sealing part as (b) the sealing part processing process in the method for folding the secondary battery according to an embodiment of the present invention.
FIG. 10 is a process view illustrating a state of being folded at an angle of 90° in (c) a sealing part folding process in the method for folding the secondary battery according to an embodiment of the present invention.
FIG. 11 is a process view illustrating a state of being folded at an angle of 180° in (c) the sealing part folding process in the method for folding the secondary battery according to an embodiment of the present invention.
FIG. 12 is a process view illustrating a state of being folded at an angle of 270° in (c) the sealing part folding process in the method for folding the secondary battery according to an embodiment of the present invention.
FIG. 13 is a process view illustrating a state of being folded at an angle of 360° in (c) the sealing part folding process in the method for folding the secondary battery according to an embodiment of the present invention.
FIG. 14 is a process view illustrating a cooling process in the method for folding the secondary battery according to an embodiment of the present invention.
FIG. 15 is a process view illustrating a pressing process in the method for folding the secondary battery according to an embodiment of the present invention.
FIG. 16 is a process view illustrating (e) a protective tape attachment process in the method for folding the secondary battery according to an embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to embodiment of the present invention]

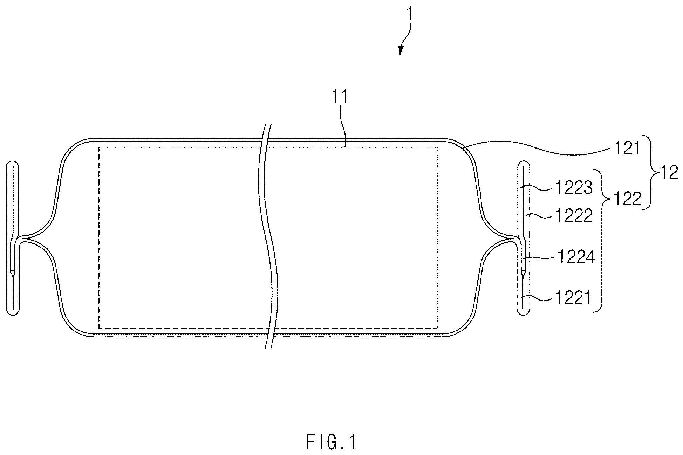

FIG. 1 is a front view of a secondary battery according to an embodiment of the present invention.

That is, as illustrated in FIG. 1, a secondary battery according to an embodiment of the present invention includes an electrode assembly 11 and a pouch 12 that accommodates the electrode assembly 11.

### Electrode assembly

The electrode assembly 11 has a structure in which electrodes and separators are alternately arranged and includes a positive electrode and a negative electrode. That is, the electrode assembly has a structure in which the positive electrodes and the negative electrodes are alternately disposed with the separator therebetween.

### Pouch

The pouch 12 includes an accommodation part 121 in which the electrode assembly is accommodated, and a sealing part 122 disposed along an edge of the accommodation part 121 to seal the accommodation part 121.

Here, the sealing part 122 includes a first sealing surface 1221 bent vertically in one direction (downward direction when viewed in FIG. 1) from an end of the accommodation part 121, a second sealing surface 1222 bent vertically in the other direction (upward direction when viewed in FIG. 1) from an end of the first sealing surface 1221, a third sealing surface 1223 bent vertically in a direction (left and right direction of the second sealing surface when viewed in FIG. 1), in which the first sealing surface 1221 is disposed, from an end of the second sealing surface 1222, and a fourth sealing surface 1224 inserted between the first sealing surface 1221 and the second sealing surface 1222 from an end of the third sealing surface 1223.

That is, the sealing part 122 may include the first to fourth sealing surfaces to significantly prevent the folded sealing part from being loosened and increase in sealing force at an end of the sealing part.

The fourth sealing surface 1224 may adhere together with the first sealing surface 1221 and the second sealing surface 1222. That is, when the first sealing surface 1221 and the second sealing surface 1222 adhere, the fourth sealing surface may adhere together. Thus, adhesion force of the fourth sealing surface 1224 may increase, and the loosening phenomenon may be significantly prevented.

The first sealing surface 1221 and the second sealing surface 1222 may adhere in a state of being in contact with each other, and the second sealing surface 1222 and the third sealing surface 1223 may adhere in a state of being in contact with each other. Thus, a volume of the sealing part may be minimized. That is, the first sealing surface may be in contact with one side of the second sealing surface 1222 facing the accommodation part, and the third sealing surface may be in contact with the other side of the second sealing surface 1222 facing the accommodation part.

A length of the fourth sealing surface 1224 may be less than or equal to half a length of the first sealing surface 1221 when measured along one direction (direction parallel to a thickness direction of the electrode assembly). Preferably, the length of the fourth sealing surface 1224 may be equal to half the length of the first sealing surface 1221. This may simultaneously increase in adhesion force between the fourth sealing surface 1224 and the first sealing surface and adhesion force between the first sealing surface 1221 and the second sealing surface.

The adhesion force between the fourth sealing surface and the first sealing surface or between the fourth sealing surface and the second sealing surface may be greater than that between the first sealing surface and the second sealing surface or between the second sealing surface and the third sealing surface. This may prevent a problem in which the fourth sealing surface is separated from the first and second sealing surfaces even if there is a gap between the first and second sealing surfaces and between the second and third sealing surfaces.

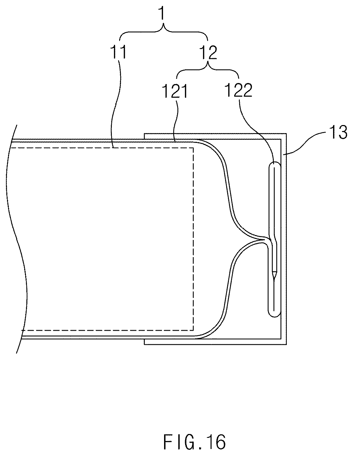

Referring to FIG. 16, the secondary battery 1 according to an embodiment of the present invention includes a protective tape 13 that attaches the folded sealing part 122 to the accommodation part. That is, the protective tape 13 is attached to the accommodation part at both ends while including the folded sealing part 122. Thus, the folded sealing part may be protected from the outside.

The sealing part of the pouch having such a structure may be folded using an apparatus for folding the secondary battery according to an embodiment of the present invention.

In particular, an apparatus 2 for folding the secondary battery according to an embodiment of the present invention may include a folding unit 20 that is folded to rotate at least once in a state of pressing the sealing part, and thus, a work process may be simplified to shorten a work time.

To explain more specifically, in the apparatus 2 for folding the secondary battery according to an embodiment of the present invention, the sealing part may rotate only at least once using the folding unit providing with first and second folding members 21 and 22 so that the sealing part 122 of the pouch 12 provides the first sealing surface 1221, the second sealing surface 1222, the third sealing surface 1223, and the fourth sealing surface 1224, and thus, the work process may be simplified to shorten the work time.

Hereinafter, the apparatus for folding the secondary battery according to an embodiment of the present invention will be described in detail with reference to the accompanying drawings.

### [Apparatus for folding secondary battery according to embodiment of the present invention]

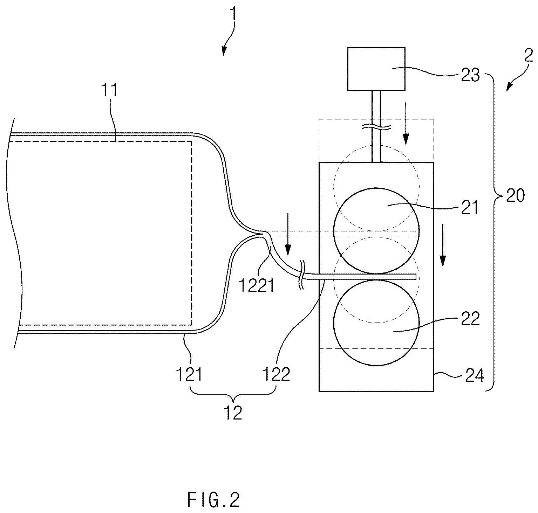

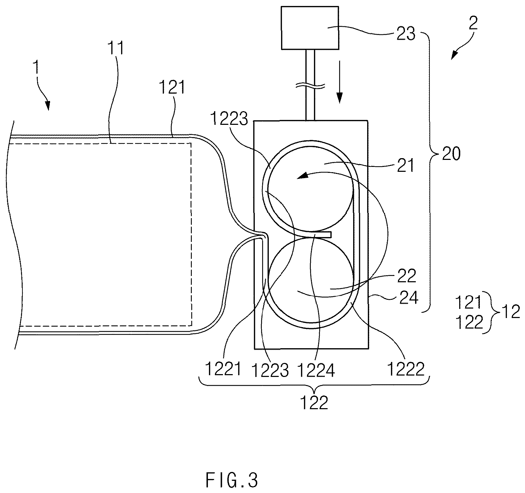

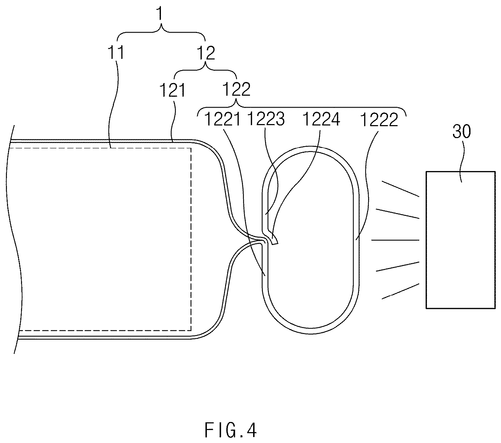

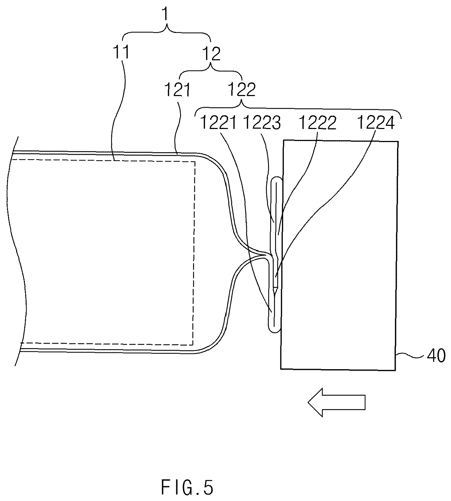

FIG. 2 is a front view illustrating a state before the secondary battery is folded by the apparatus for folding the secondary battery according to an embodiment of the present invention, FIG. 3 is a front view illustrating a state after the secondary battery is folded by the apparatus for folding the secondary battery according to an embodiment of the present invention, FIG. 4 is a front view illustrating a cooling member of the apparatus for folding the secondary battery according to an embodiment of the present invention, and FIG. 5 is a front view illustrating a pressing member of the apparatus for folding the secondary battery according to an embodiment of the present invention.

As illustrated in FIG. 2, the apparatus 2 for folding the secondary battery according to an embodiment of the present invention includes a folding unit 20 that rotates the sealing part at least once in the state of pressing the sealing part to fold the sealing part, a cooling unit 30 that cools the folded sealing part at room temperature or a preset temperature to cure the sealing part, and a pressing unit 40 that presses the sealing part so that the sealing part adheres.

### Folding unit

The folding unit 20 includes a first folding member 21, a second folding member 22, a moving member 23, and a rotating member 24.

The first folding member 21 and the second folding member 22 moves from one end (end of the sealing part to which the accommodation part is connected when viewed in FIG. 2) of the sealing part up to a distal end of the sealing part to press the sealing part. In particular, the first folding member 21 and the second folding member 22 rotate at least once to fold the sealing part 122 of the pouch 12 in one direction (upward when viewed in FIG. 3) through the rotation member in the state of pressing the sealing part 122 of the pouch 12 in which the electrode assembly 11 is accommodated.

That is, when the first folding member 21 and the second folding member 22 rotate at least once so that the positions of the first folding member 21 and the second folding member 22 are switched while pressing the end of the sealing member 122, the sealing member 122 may be folded in a shape of the number '9'. In other words, the sealing part 122 may be folded into a shape of approximately the number '9' by simply rotating the sealing part once. This may be folded so that the sealing part 122 has a first sealing surface 1221, a second sealing surface 1222, a third sealing surface 1223, and a fourth sealing surface 1224. As a result, the process may be simplified, and the process time may be shortened.

The moving member 23 is configured to provide the first sealing surface on the sealing part. That is, when the first folding member 21 and the second folding member 22 press an end of the sealing part, the moving member 23 moves the first folding member 21 and the second folding member 22 in a direction parallel to the thickness direction of the electrode assembly to provide the first sealing surface 1221 that is vertically folded in a direction (downward direction when viewed in FIG. 2) from the end of the accommodation part. This is to further minimize a length of the folded sealing part as illustrated in FIG. 2.

That is, as illustrated in FIG. 2, the moving member 23 allows the folding length of the pouch 12 to increase by utilizing a space below the accommodation part of the pouch 12, and in particular, prevents the folded pouch 12 from protruding above or below the accommodation part.

Here, the moving member 23 may be a cylinder or a driving motor.

Particularly, the moving member 23 allows the sealing member 122 to descend by a diameter length of the folding member.

The rotating member 24 rotates the first folding member 21 and the second folding member at least once to provide the second sealing surface 1222 that is vertically bent in the other direction (upward when viewed in FIG. 3) from an end of the first sealing surface 1221, the third sealing surface that is vertically bent in a direction (downward when viewed in FIG. 2), in which the first sealing surface 1221 is disposed, from an end of the second sealing surface 1222, and the fourth sealing surface 1224 inserted between the first sealing surface 1221 and the second sealing surface 1222 from an end of the third sealing surface 1223.

The apparatus 2 for folding the secondary battery according to an embodiment of the present invention, which has such a configuration, moves to the end of the sealing part 122 in the state of pressing the end of the sealing part 122 connected to the accommodation part by the first folding member 21 and the second folding member 22. Here, when the first folding member 21 and the second folding member 22 press the end of the sealing part, the moving member 23 moves the first folding member 21 and the second folding member 22 in one direction to provide the first sealing surface 1221 that is vertically folded in one direction from the end of the accommodation part. Thereafter, the positions of the first folding member 21 and the second folding member 22 are changed by rotating the rotating member 24 at least once. Then, the sealing part 122 rotates at least once together with the first folding member 21 and the second folding member 22, and as a result, the sealing part 122 may be folded to provide the first sealing surface 1221, the second sealing surface 1222, the third sealing surface 1223, and the fourth sealing surface 1224.

Here, the first folding member 21 and the second folding member 22 may be provided as hot rollers to heat the sealing member 122 while pressing the sealing part 122. Thus, the first folding member 21 and the second folding member 22 may prevent marks and folding from occurring in the sealing member 122 as the sealing member 122 is in rolling contact with the sealing member 122, and when the sealing member 122 is folded, the sealing member 122 may be folded more effectively by softening the sealing member 122, and in particular, cracks and insulation breakdown may be prevented from occurring in the sealing member 122.

The first folding member 21 and the second folding member 22 may have the same size and shape, and each diameter may be 1/5 or less of a length from one end to the other end of the sealing member 122. Thus, the size of each of the first and second folding members 21 and 22 relative to an area of the sealing part 122 may be adjusted, and thus, when the first and second folding members 21 and 22 rotate at least once, the sealing part 122 may be sufficiently folded perfectly.

Here, the first folding member 21 and the second folding member 22 may have different heating temperatures. Particularly, when the first and second folding members 21 and 22 rotate in a direction toward the first folding member 21, the second folding member may have a heating temperature greater than that of the first folding member 21. This means that one end of the sealing part 122 connected to the accommodation part has strength greater than that of the other end, and thus, one end of the sealing part 122 may be softened more stably to increase in folding force. That is, referring to FIG. 3, the second folding member 22 may have a heating temperature greater than that of the first folding member 21.

For example, the first folding member 21 is heated to a temperature of 100°C to 140°C, and the second folding member 22 is heated to a temperature of 120°C to 160°C. Here, the second folding member 22 has a heating temperature greater than that of the first folding member 21.

The apparatus 2 for folding the secondary battery according to the embodiment of the present invention may further include a cooling unit 30 for curing the folded sealing part 122.

### Cooling unit

The cooling unit 30 cools the sealing part 122 folded by the first and second folding members 21 and 22 to room temperature or a preset temperature to cure the sealing part 122.

Particularly, the cooling unit 30 may cool the folded sealing part 122 at room temperature, but for the work efficiency, the sealing part 122 may be cooled to a preset temperature less than room temperature to shorten the work time.

Here, the preset temperature may be -10°C to 20°C, and preferably 0°C to 10°C. If the preset temperature is -10°C or less, the sealing part 122 of the pouch 12 may be damaged, and if it is 20°C or more, it may take a long time to cool the sealing part 122 to deteriorate workability.

The cooling unit 30 may be a blower that blows cooled air or a cooling facility provided with a cooling room that is adjusted to a set temperature.

The apparatus 2 for folding the secondary battery according to an embodiment of the present invention may further include a pressing unit 40 that applies heat and a pressure to the folded sealing part 122 toward the electrode assembly 11 accommodated in the pouch 12.

### Pressing unit

The pressing unit 40 is provided as a pressing block that presses the folded sealing part 122 toward the accommodation part using the heat and pressure. Then, the folded sealing part 122 is pressed flat and bonded at the same time, and thus, the flatly folded sealing part 122 may be obtained.

That is, the pressing unit presses and bonds the sealing part having the first sealing surface, the second sealing surface, the third sealing surface, and the fourth sealing surface.

Particularly, the pressing unit 40 presses the fourth sealing surface 1224 in a state of being inserted between the first sealing surface 1221 and the second sealing surface 1222 to allow the fourth sealing surface to adhere without being separated from the first and second sealing surfaces.

The pressing unit 40 may have a temperature of 100°C to 140°C.

Thus, the apparatus 2 for folding the secondary battery according to an embodiment of the present invention may fold the sealing part 122 of the pouch 12 more easily to simplify the work process and shorten the work time.

Hereinafter, a folding method using the apparatus for folding the secondary battery according to an embodiment of the present invention will be described.

### [Method for folding secondary battery according to embodiment of the present invention]

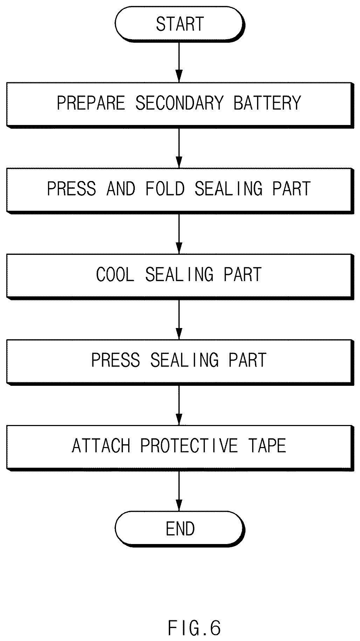

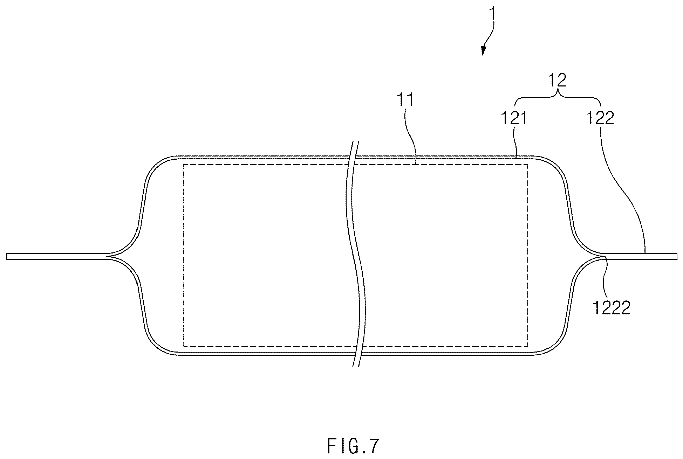

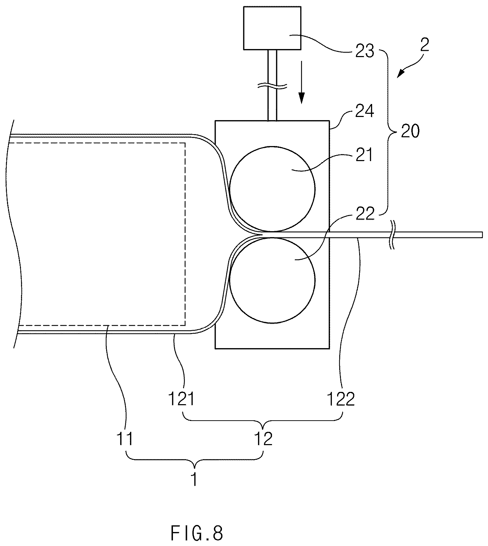

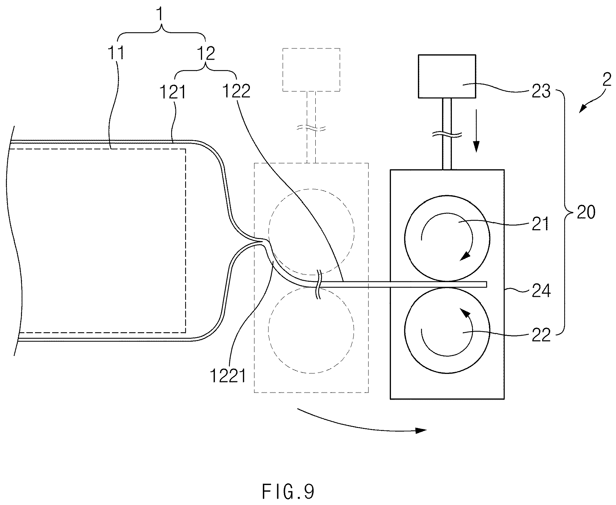

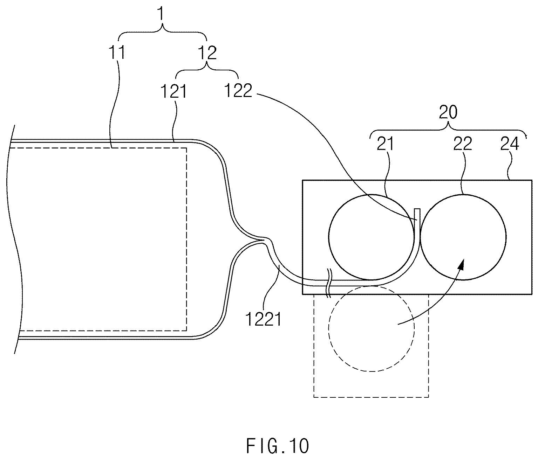

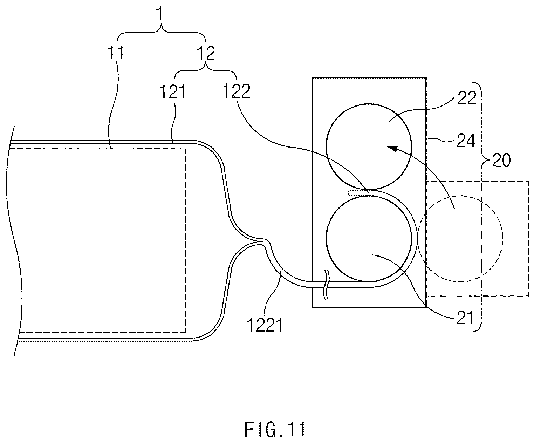

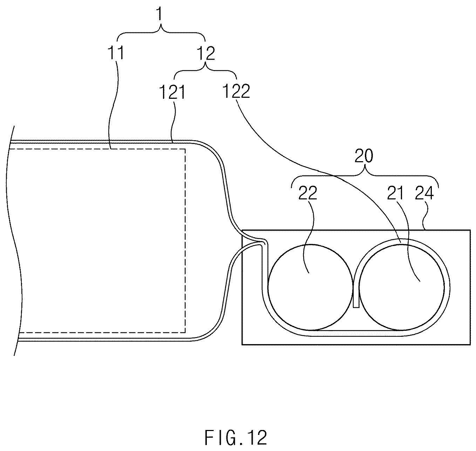

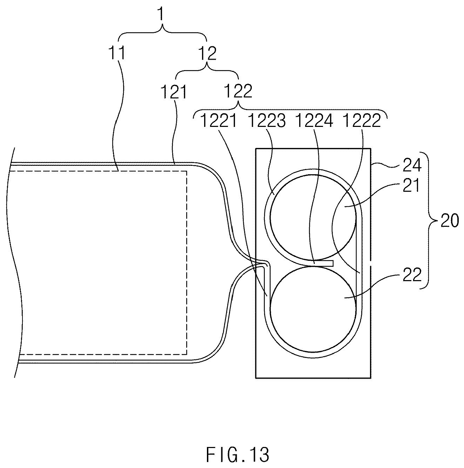

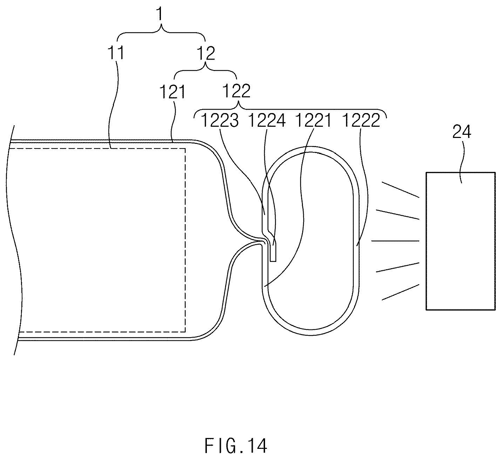

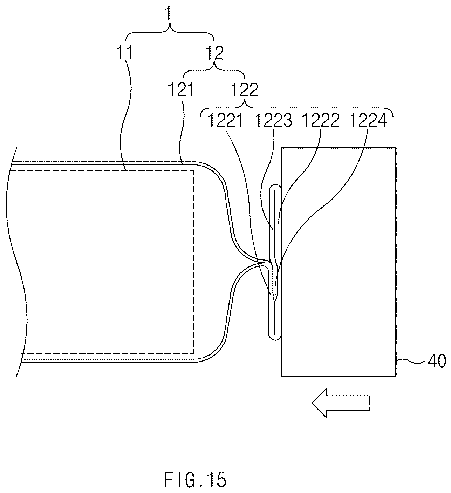

FIG. 6 is a flowchart illustrating a method for folding a secondary battery according to an embodiment of the present invention, FIG. 7 is a front view illustrating a secondary battery prepared by (a) a secondary battery preparation process in the method for folding the secondary battery according to an embodiment of the present invention, FIG. 8 is a process view illustrating a state before pressing a sealing part as (b) a sealing part processing process in the method for folding the secondary battery according to an embodiment of the present invention, FIG. 9 is a process view illustrating a state after completely pressing the sealing part as (b) the sealing part processing process in the method for folding the secondary battery according to an embodiment of the present invention, FIG. 10 is a process view illustrating a state of being folded at an angle of 90° in (c) a sealing part folding process in the method for folding the secondary battery according to an embodiment of the present invention, FIG. 11 is a process view illustrating a state of being folded at an angle of 180° in (c) the sealing part folding process in the method for folding the secondary battery according to an embodiment of the present invention, FIG. 12 is a process view illustrating a state of being folded at an angle of 270° in (c) the sealing part folding process in the method for folding the secondary battery according to an embodiment of the present invention, FIG. 13 is a process view illustrating a state of being folded at an angle of 360° in (c) the sealing part folding process in the method for folding the secondary battery according to an embodiment of the present invention, FIG. 14 is a process view illustrating a cooling process in the method for folding the secondary battery according to an embodiment of the present invention, FIG. 15 is a process view illustrating a pressing process in the method for folding the secondary battery according to an embodiment of the present invention, and FIG. 16 is a process view illustrating (e) a protective tape attachment process in the method for folding the secondary battery according to an embodiment of the present invention.

As illustrated in FIG. 6, the method for folding the secondary battery according to an embodiment of the present invention includes (a) the secondary battery preparation process, (b) the sealing part pressing and folding process, (c) the sealing part cooling process, (d) the sealing part pressing process, and (e) the protective tape attachment process.

### (a) Secondary battery preparation process

As illustrated in FIG. 7, in (a) the secondary battery preparation process, a secondary battery including an electrode assembly 11 and a pouch 12, in which the electrode assembly is accommodated, is prepared.

Here, the pouch 12 includes an accommodation part 121 in which the electrode assembly is accommodated, and a sealing part 122 formed by sealing an edge of the accommodation part 121.

### (b) Sealing part pressing and folding process

As illustrated in FIGS. 8 and 9, in (b) the sealing part pressing and folding process, the sealing part rotates at least once in a state of being folded through a folding unit 20 to fold the sealing part. Here, the folding unit 20 includes a first folding member 21, a second folding member 22, a moving member 23, and a rotating member 24.

In more detail, (b) the sealing part pressing and folding process includes: a process of pressing one end of the sealing part connected to an end of the accommodation part through the first folding member and the second folding member of the folding unit; a process of forming a first sealing surface that is bent in one direction from the end of the accommodation part by moving the sealing part in the one direction parallel to a thickness direction of the electrode assembly through the moving member of the folding unit when the one end of the sealing part is pressed; a process of moving the first folding member and the second folding member up to an end of the sealing part; and a process of rotating the first folding member and the second folding member at least once through the rotating member to form a second sealing surface bent from an end of the first sealing surface in the other direction, a third sealing surface bent in a direction facing the first sealing surface from an end of the second sealing surface, and a fourth sealing surface inserted between the first sealing surface and the second sealing surface from an end of the third sealing surface.

(b) the sealing part pressing and folding process including such the processes will be described in more detail. The sealing part 122 is pressed using the first folding member 21 and the second folding member 22. That is, the first folding member 21 and the second folding member 22 press the one end of the sealing member 122 connected to the accommodation part 121. Particularly, the first folding member 21 and the second folding member 22 fold and bend the one end of the sealing member 122 and then move to a distal end of the sealing member 122.

Here, the first folding member 21 and the second folding member 22 may be provided as hot rollers to heat the sealing member 122 while pressing the sealing part 122. Thus, when folding the sealing part 122, folding force may increase by softening the sealing part 122, and in particular, cracks and insulation breakdown may be prevented from occurring in the sealing part 122.

The first and second folding members 21 and 22 may have the same size, and each diameter may be 1/5 or less of a length from the one end to the distal end of the sealing member 122. Thus, when the first and second folding members 21 and 22 rotate at least once, the sealing part 122 may be folded stably. Here, if the diameter of each of the first and second folding members 21 and 22 is 1/5 or more of the length of the sealing member 122, the first and second folding members 21 and 22 may be disposed at one end of the sealing member 122 before the first and second folding members rotate once, and thus, folding defects may occur.

The first and second folding members 21 and 22 may have different heating temperatures. In particular, when folding the sealing part 122, the sealing surface of the sealing part 122 connected to the accommodation part may be heated to a temperature greater than that of the remaining surface of the sealing part 122.

That is, when the first and second folding members 21 and 22 rotate in a direction toward the first folding member 21, the second folding member may have a heating temperature greater than that of the first folding member 21. Since the one end of the sealing part 122 connected to the accommodation part has strength greater than that of the distal end, the one end of the sealing part may be heated to a temperature greater than that of the distal end, and as a result, the sealing surface may be softened more effectively.

In (b) the sealing part pressing and folding process, the process of folding the one end of the sealing part 122 in one direction (downward when viewed in FIG. 9) before pressing the one end of the sealing part 122 may be performed first. That is, when the first and second folding members 21 and 22 press the one end of the sealing part 122, the moving member 23 may be used to move the first and second folding members 21 and 22 in one direction parallel to the thickness direction of the electrode assembly. Then, the one end of the sealing part 122 pressed by the first and second folding members 21 and 22 may move in one direction, and at this time, the one end connected to the accommodation part may be bent in one direction to form the first sealing surface 1221.

Thereafter, the first and second folding members 21 and 22 move from the one end to the distal end of the sealing part 122.

Here, the moving member 23 moves the first and second folding members 21 and 22 by the diameter of the second folding member 22.

As illustrated in FIGS. 10 to 13, subsequently, the sealing part 122 is folded by rotating the first and second folding members 21 and 22 at least once in one direction (a counterclockwise direction with reference to FIG. 10) so that the positions of the first and second folding members 21 and 22 are changed through the rotating member. Then, the sealing part 122 has a '9' shape.

That is, (b) the sealing part pressing and folding process may fold the sealing part 122 into the '9' shape by simply rotating the sealing part 122 once using the first and second folding members 21 and 22, thereby simplifying a work process and saving a work time.

As a result, the sealing part 122 may be folded to form a first sealing surface 1221, a second sealing surface 1222, a third sealing surface 1223, and a fourth sealing surface 1224.

Here, the sealing part folding process will be described in more detail. As illustrated in FIG. 10, the one end of the sealing part 122 is pressed using the first and second folding members 21 and 22 and then rotates at an angle of 90° in the counterclockwise direction. Then, the first folding member 21 and the second folding member 22 may be disposed horizontally so that the distal end of the sealing member 122 is folded at an angle of 90°.

Next, as illustrated in FIG. 11, the distal end of the sealing part 122 is pressed using the first and second folding members 21 and 22 and then rotates at an angle of 180° in the counterclockwise direction. Then, the positions of the first folding member 21 and the second folding member may be changed so that the distal end of the sealing member 122 is folded up to an angle of 180°.

Next, as illustrated in FIG. 12, the distal end of the sealing part 122 is pressed using the first and second folding members 21 and 22 and then rotates at an angle of 270° in the counterclockwise direction. Then, the distal end of the sealing part 122 may be folded at an angle of 270° while the positions of the first folding member 21 and the second folding member are disposed horizontally.

Next, as illustrated in FIG. 13, the distal end of the sealing part 122 is pressed using the first and second folding members 21 and 22 and then rotates at an angle of 360° in the counterclockwise direction. Then, the positions of the first folding member 21 and the second folding member may be changed so that the distal end of the sealing member 122 is folded up to an angle of 360°.

In summary, in (b) the sealing part pressing and folding process, the first folding member 21 and the second folding member 22 may rotate at least once through the rotating member 24 to form a second sealing surface 1222 bent in the other direction from an end of the first sealing surface 1221, a third sealing surface 1223 bent in a direction toward the first sealing surface 1221 from an end of the second sealing surface 1222, and a fourth sealing surface 1224 inserted between the first sealing surface 1221 and the second sealing surface 1222 from an end of the third sealing surface 1223.

### (c) Sealing part cooling process

In (c) the sealing part cooling process, as illustrated in FIG. 14, the folded sealing part 122 is cured without being restored.

In the cooling process, the first and second folding members 21 and 22 are removed from the folded sealing part 122, and then, cooled air is sprayed onto the folded sealing part 122 using the cooling unit 30. Then, the sealing part 122 is cooled to room temperature or a preset temperature. In this manner, the folded sealing part 122 may be quickly cured.

Here, the preset temperature may be between -10 degrees and 20 degrees.

### (d) Sealing part pressing process

In (d) the sealing part pressing process, as illustrated in FIG. 15, the folded sealing part 122 may be pressed through heat and a pressure in a direction, in which the accommodation part is accommodated, by using the pressing unit 40. Then, the sealing part 122 is pressed while overlapping to be flattened. Thus, the sealing parts having the first sealing surface, the second sealing surface, the third sealing surface, and the fourth sealing surface are pressed and bonded.

Particularly, the pressing unit 40 presses the fourth sealing surface 1224 in a state of being inserted between the first sealing surface 1221 and the second sealing surface 1222 to allow the fourth sealing surface to adhere between the first and second sealing surfaces without being separated.

The pressing unit 40 may have a temperature of 100°C to 140°C.

### (e) Protective tape attachment process

In (e) the protective tape attachment process, as illustrated in FIG. 16, the folded sealing part 122 is attached to the accommodation part using a protective tape 13. That is, the protective tape 13 is attached to the accommodation part at both ends while including the folded sealing part 122. Thus, fixing force of the folded sealing part 122 may increase.

When these processes are completed, a finished secondary battery 1 may be manufactured.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Secondary battery
11: Electrode assembly
12: Pouch
121: Electrode assembly accommodation part
122: Sealing part
1221: First sealing surface
1222: Second sealing surface
1223: Third sealing surface
1224: Fourth sealing surface
13: Protective tape
2: Apparatus for folding secondary battery
20: Folding unit
21: First folding member
22: Second folding member
23: Moving member
30: Cooling unit
40: Pressing unit

## Claims

1. A secondary battery comprising a pouch provided with an accommodation part, in which an electrode assembly is accommodated, and a sealing part provided at an end of the accommodation part to seal the accommodation part,
wherein the sealing part comprises:
a first sealing surface bent from the end of the accommodation part in one direction;
a second sealing surface bent from an end of the first sealing surface in the other direction;
a third sealing surface bent from an end of the second sealing surface in a direction in which the first sealing surface is disposed; and
a fourth sealing surface inserted between the first sealing surface and the second sealing surface from an end of the third sealing surface.

2. The secondary battery of claim 1, wherein the fourth sealing surface has a length less than or equal to half a length of the first sealing surface when measured in the one direction.

3. The secondary battery of claim 1, wherein the fourth sealing surface adheres to the first sealing surface and the second sealing surface.

4. The secondary battery of claim 1, wherein the second sealing surface has one side that is in contact with the first sealing surface and the other side that is in contact with the third sealing surface.

5. An apparatus for folding a secondary battery, which folds a pouch provided with an accommodation part, in which an electrode assembly is accommodated, and a sealing part provided at an end of the accommodation part to seal the accommodation part, the apparatus comprising:
a folding unit configured to rotate the sealing part at least once in a state of pressing the sealing part, thereby folding the sealing part.

6. The apparatus of claim 5, wherein the folding unit comprises:
a first folding member and a second folding member, which move from one end to a distal end of the sealing part to press the sealing part;
a moving member configured to move the first folding member and the second folding member in one direction parallel to a thickness direction of the electrode assembly when the one end of the sealing part is pressed by the first folding member and the second folding member so that a first sealing surface bent from the end of the accommodation part in the one direction is provided; and
a rotating member configured to rotate the first folding member and the second folding member at least once, thereby providing a second sealing surface bent from an end of the first sealing surface in the other direction, a third sealing surface bent from an end of the second sealing surface in a direction in which the first sealing surface is disposed, and a fourth sealing surface inserted between the first sealing surface and the second sealing surface from an end of the third sealing surface.

7. The apparatus of claim 6, wherein each of the first folding member and the second folding member is provided as a hot roller configured to heat the sealing part in the state of pressing the sealing part.

8. The apparatus of claim 6, wherein the first folding member and the second folding member have the same size and a diameter that is less than 1/5 of a length from the one end to the distal end of the sealing part.

9. The apparatus of claim 6, wherein the first folding member and the second folding member have heating temperatures different from each other.

10. The apparatus of claim 9, wherein, when the first folding member and the second folding member rotate in a direction facing the first folding member, the second folding member has a heating temperature greater than that of the first folding member.

11. The apparatus of claim 6, further comprising a cooling unit configured to cool the sealing part folded by the first folding member and the second folding member to room temperature or a preset temperature, thereby curing the sealing part.

12. The apparatus of claim 6, further comprising a pressing unit configured to press and bond the sealing part having the first sealing surface, the second sealing surface, the third sealing surface, and the fourth sealing surface,
wherein the pressing unit adheres in a state in which the fourth sealing surface is inserted between the first sealing surface and the second sealing surface.

13. A method for folding a secondary battery, the method comprising:
(a) preparing the secondary battery, wherein the secondary battery comprises an electrode assembly and a pouch provided with an accommodation part, in which the electrode assembly is accommodated, and a sealing part provided at an end of the accommodation part to seal the accommodation part; and
(b) rotating the sealing part at least once through a folding unit in a state of pressing the sealing part to fold the sealing part.

14. The method of claim 13, wherein (b) the rotating of the sealing part comprises:
pressing one end of the sealing part connected to an end of the accommodation part through the first folding member and the second folding member of the folding unit;
forming a first sealing surface bent in one direction from the end of the accommodation part by moving the sealing part in the one direction parallel to a thickness direction of the electrode assembly through a moving member of the folding unit when the one end of the sealing part is pressed;
moving the first folding member and the second folding member up to an end of the sealing part; and
rotating the first folding member and the second folding member at least once through a rotating member of the folding unit to form a second sealing surface bent from an end of the first sealing surface in the other direction, a third sealing surface bent in a direction facing the first sealing surface from an end of the second sealing surface, and a fourth sealing surface inserted between the first sealing surface and the second sealing surface from an end of the third sealing surface.

15. The method of claim 14, wherein, in (b) the rotating of the sealing part, the first folding member and the second folding member are configured to heat the sealing part while pressing the sealing part.

16. The method of claim 15, wherein, in (b) the rotating of the sealing part, the first folding member and the second folding member have the same size and a diameter that is less than 1/5 of a length from the one end to the distal end of the sealing part.

17. The method of claim 15, wherein, in (b) the rotating of the sealing part, the first and second folding members have heating temperatures different from each other.

18. The method of claim 17, wherein, when the first folding member and the second folding member rotate in a direction facing the first folding member, the second folding member has a heating temperature greater than that of the first folding member.

19. The method of claim 13, further comprising cooling the sealing part folded in (b) the rotating of the sealing part.

20. The method of claim 19, further comprising pressing the sealing part in a direction toward the electrode assembly accommodation part so that the folded sealing part overlaps to be flattened.
